# EUROPEAN PATENT SPECIFICATION

(11) **EP 2 297 989 B1**
(45) Date of publication and mention of the grant of the patent: **10.06.2020**
(21) Application number: 08779440.0
(22) Date of filing: 10.07.2008
(51) Int. Cl.: H04W 8/18, H04L 12/24

(54) **A METHOD AND APPARATUS FOR CONTEXT-BASED CONTENT MANAGEMENT**
VERFAHREN UND VORRICHTUNG ZUR INHALTSVERWALTUNG AUF KONTEXTBASIS
PROCÉDÉ ET APPAREIL DE GESTION DE CONTENU À BASE DE CONTEXTE

(43) Date of publication of application: 23.03.2011
(73) Proprietor: Telefonaktiebolaget LM Ericsson (publ), 164 83 Stockholm (SE)
(72) Inventor: HJELM, Johan, Tokyo 165-0025 (JP); KANTER, Theo, S-144 62 Rönninge (SE); LIDSTRÖM, Mattias, S-112 24 Stockholm (SE)
(74) Representative: Brann AB
(86) International application number: PCT/SE2008/050863
(87) International publication number: WO 2010/005351

(56) References cited:
- EP-B1- 1 220 510
- WO-A1-2006/115442
- US-A1- 2006 218 621
- US-A1- 2007 156 659
- EVI SYUKUR ET AL: "Context-Aware Regulation of Context-Aware Mobile Services in Pervasive Computing Environments", 1 January 2006 (2006-01-01), COMPUTATIONAL SCIENCE AND ITS APPLICATIONS - ICCSA 2006 LECTURE NOTES IN COMPUTER SCIENCE;;LNCS, SPRINGER, BERLIN, DE, PAGE(S) 138 - 147, XP019032134, ISBN: 978-3-540-34077-5 * page 140, paragraph 3 - page 142 *
- MONTANARI R ET AL: "Context-based security management for multi-agent systems", MULTI-AGENT SECURITY AND SURVIVABILITY, 2005 IEEE 2ND SYMPOSIUM ON PHILADELPHIA, PA, USA AUG. 30-31, 2005, PISCATAWAY, NJ, USA,IEEE, 30 August 2005 (2005-08-30), pages 75-84, XP010835042, DOI: 10.1109/MASSUR.2005.1507050 ISBN: 978-0-7803-9447-6
- SYUKUR E. ET AL: 'Context-aware regulation of context-aware mobile services in pervasive computing environments' COMPUTATIONAL SCIENCE AND ITS APPLICATIONS - ICCSA, [Online] vol. 3983, 2006, pages 138 - 147, XP019032134 Retrieved from the Internet: <URL:http://www.springerlink.com/content/a1 8k82j827168t80>
- MONTANARI R. ET AL: 'Context-based security management for multi-agent Systems' MULTI-AGENT SECURITY AND SURVIVABILITY, 2005 IEEE 2ND SYMPOSIUM ON 30 August 2005 - 31 August 2005, pages 75 - 84, XP010835042
- MOSTEFAOUI S.K. ET AL: 'Context Aware Service Provisioning' PERVASIVE SERVICES, 2004, ICPS 2004, IEEE/ACS LNTERNATIONAL CONFERENCE ON 19 July 2004 - 23 July 2004, pages 71 - 80, XP010759996
- AL-OQILY I. ET AL: 'Automating Overlay Networks Management' ADVANCED INFORMATION NETWORKING AND APPLICATIONS,2007, AINA'07, 21ST INTERNATIONAL CONFERENCE ON 21 May 2007 - 23 May 2007, pages 386 - 393, XP031095324
- NEISSE, R ET AL.: 'An Information Model and Architecture for Context-Aware Management Domains' POLICIES FOR DISTRIBUTED SYSTEMS AND NETWORKS, 2008, POLICY 2008 pages 162 - 169, XP031281612

## Description

### TECHNICAL FIELD

The present invention generally relates to content management, and particularly relates to context-based content management, such as managed access or distribution of cached content based on user contexts.

### BACKGROUND

User context is a known basis, at least in theory, for adapting the computing experience of users, particularly in mobile applications. "Context" may be narrowly defined, such as user location, or it may be more richly defined, such as with time-of-day information, schedule/calendar information, and physical sensing. Sensing in this regard may include feedback from the mobile device of a user, such as motion sensing, ambient light sensing, acoustic environment sensing, etc. However, while the concept of adapting content management responsive to rich context information is known, in practice there are few working examples. In part, the absence of context-based content management reflects the relatively recent advent of communication networks and corresponding devices capable of providing media rich content services, such as multimedia streaming, mobile television, etc. This increasing sophistication is seen across the spectrum of markets, spanning commercial and private applications. For example, "residential" networks are becoming increasingly sophisticated, and now represent a relatively "rich" conduit for multimedia and other content delivery into and out of residential networks. The home IMS Gateway (referred to as "HIGA" by its developer, ERICSSON AB) exemplifies the increasing sophistication of such networking, and serves as one example of residential gateways that provide for interconnection with a range of services and applications.

With HIGA and other technologies, such as those applications and services available through an IP Multimedia Subsystem (IMS) network, there is an increasingly rich array of multimedia and other content, which may be downloaded or otherwise streamed to user devices. However, it may be that content is cached or otherwise made available for multiple users having different interests and different maturity levels, such as might be the case for a familial group of users using a home caching server to store different types of content of interest. Further, given the ability of portable user devices to receive multimedia and other content essentially anywhere, the type of content appropriate for usage by a given user may change as a function of user context. Further US 2007/156659 A1 describes an information management system, where relevant policies are deployed to targets while policies which are not relevant are not. Additionally, the document titled "EVI SYUKUR ET AL: 'Context-Aware Regulation of Context-Aware Mobile Services in Pervasive Computing Environments', 1 January 2006 (2006-01-01), COMPUTATIONAL SCIENCE AND ITS APPLICATIONS - ICCSA 2006 LECTURE NOTES IN COMPUTER SCIENCE;;LNCS, SPRINGER, BERLIN, DE, PAGE(S) 138 - 147, XP019032134, ISBN: 978-3-540-34077-5" describes a design and prototype implementation of a context-aware policy system that governs mobile services visibility and execution in pervasive computing environments. Additionally the document titled "MONTANARI R ET AL: 'Context-based security management for multi-agent systems', MULTI-AGENT SECURITY AND SURVIVABILITY, 2005 IEEE 2ND SYMPOSIUM ON PHILADELPHIA, PA, USA AUG. 30-31, 2005, PISCATAWAY, NJ, USA, IEEE, 30 August 2005 (2005-08-30), pages 75-84, XP010835042, DOI: 10.1109/MASSUR.2005.1507050 ISBN: 978-0-7803-9447-6" discloses some issues concerning the specification and enforcement of context-driven policies and presents a novel context-based policy approach that considers context as a first-class principle to guide both policy specification and enforcement.

### SUMMARY

The invention is defined by the appended claims.
In one or more embodiments taught herein, a system for context-based management of cached content includes policy and context servers. The policy server makes policy decisions controlling, e.g., usage of a content cache by a user, based on a contextualized policy that includes one or more context-dependent policy rules. The context server collects context information for the user and generates the contextualized policy by inserting the updated context-parameter(s) into the context-dependent policy rule(s).

Thus, the policy server obtains or otherwise updates the contextualized policy responsive to a policy decision request received from a caching agent operating as a policy enforcement point, and returns a policy decision to the caching agent. In support, the context server may be configured to collect context information for the user at least in part by receiving context information from a user agent associated with the user.

In a non-limiting example, the user may be one of potentially several or many users, along with their associated personal communication devices (multimedia cellular phones, etc.), and the content cache may comprise or otherwise be associated with a residential or commercial media gateway. In such contexts, an embodiment of the policy server provides an administrative interface operative to allow an administrator to establish and configure user/group profiles, including the aforementioned policies and context-dependent policy rules on per user and/or per group basis. Caching agents may reside within the media gateway and, as such, are operative in one or more embodiments to communicate with the policy server and/or the context server. Correspondingly, user agents may reside on individual user devices, or elsewhere within the network.

However, the present invention is not limited to the above summary of features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is block diagram of one embodiment of a system for context-based content management, shown in context with one or more communication networks and content caching systems.
Fig. 2 is a block diagram of one embodiment of a context server, configured for context-based content management.
Fig. 3 is a diagram of example structure/content for a context-based user policy.
Fig. 4 is a diagram of example structure/content for user device context information.
Fig. 5 is a logic flow diagram of one embodiment of a method for context-based policy management, for implementation at an appropriately configured context server, such as the context server of Fig. 2.
Fig. 6 is a block diagram of one embodiment of a policy server, configured for context-based content management.
Fig. 7 is a diagram of example structure/content for user/group profiles including one or more context-based user policies.
Fig. 8 is a logic flow diagram of one embodiment of a method for context-based policy management, for implementation at an appropriately configured policy server, such as the policy server of Fig. 6.

### DETAILED DESCRIPTION

In one or more embodiments, the teachings presented herein provide a method and apparatus enabling a third party (e.g., parent, service provider, IT manager, etc.) to manage permissions and policies governing per-user and per-group views and access of cached content in a content repository. In at least one embodiment, a system applies regulating views of and access to content caching, irrespective of whether the files in the cache are the result of an active download (the user using a file sharing program), or whether the files in the cache are the result of a passive download (being cached by the service provider at the user location for future usage).

At least one such system embodiment is compatible with networks based on Third Generation Partnership Project (3GPP) standards. Such embodiments leverage 3GPP IMS capabilities, such as by providing context-based content management with or through a "Home IMS Gateway" (HIGA by ERICSSON AB, or other such media gateway). In particular, such embodiments may use the identity management functions of the HIGA or another gateway offering such functions, to control the views of the cache, and actively to determine which content is allowed to be stored in the cache.

Further, and on a broad basis, the teachings presented herein provide for a hierarchy of policing roles within a media gateway, content server, or other content-related entity. Of course, at least some aspects of policy control as taught herein are not constrained to home or enterprise networks or to a particular application scenario. The proposed teachings, for example, can be used in setups that employ alternative caches, or groups of caches which handle similar content. This latter case requires that the caches are able to exchange policies, and that that the policy enforcement points (PEPs) are able to agree on the appropriate cache to which to direct downloads. This scenario can be realized, for example, using an "ERICSSON Policy Controller," referred to herein as the EPC. Of course, the EPC is ERICSSON's implementation of the 3GPP Policy Charging Rule Function (PRCF). It should be understood that other policy control entities can be used in various embodiments of the teachings presented herein.

In any case, in at least one broad aspect, the teachings presented herein provide for (1) context information aggregated from user behavior and preferences, (2) content management authority (e.g., parent, IT-manager, etc.) access policies, and (3) content availability, in order to bring about: the automatic and dynamic creation of user views; the automatic and dynamic generation of access profiles; and the automatic and dynamic invocation of content acquisition patterns. These functions allow, for example, largely autonomic operation of a content caching/policy management system. Furthermore, dynamic views enable personalized content usage (e.g., play-out) based on context-information from user and group behavior, thus increasing the utility of content, while limiting access to content not intended for particular users or groups.

In another broad aspect of the teachings presented herein, user policies are parameterized according to one or more context values. For example, a given user policy may be parameterized in terms of time-of-day and location. In his or her supervisory role, for example, a parent defines a parameterized user policy for a school-age child, in which certain content cache usage (streaming movies) or entertainment content access is prohibited during school hours, and for certain locations, e.g., school, library, etc. More sophisticated examples will be understood by those skilled in the art, and further examples are described herein. Also, it will be understood that one or more parameters associated with a given user's contextualized user policy may rely on feedback or other data from the user's device, while other parameters may not. For example, time of day need not rely on device feedback, although it certainly may be localized to the known or reported current location of the user's device. Other parameters, however, advantageously may rely on feedback from the user's device, such as temperature, motion, ambient lighting conditions, background noise levels, precise location, etc.

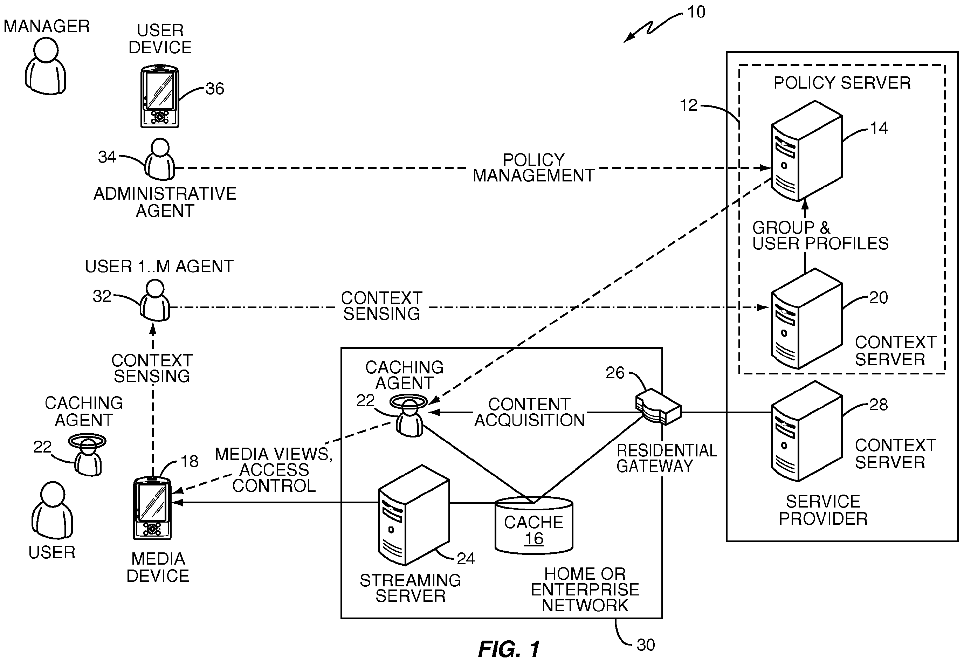

Contemplating at least some of these contextualized user policy functions in a non-limiting example context, Fig. 1 illustrates one or more networks 10 communicatively coupling content, policy, and caching entities, together with gateway entities and various user devices/agents. More particularly, Fig. 1 illustrates one embodiment of a system 12 that is configured for context-based management of cached content. The system 12 is characterized by a policy server 14 that is configured to make policy decisions controlling usage of a content cache 16 by a user, based on a contextualized policy that includes one or more context-dependent policy rules. As an example, the user accesses or attempts to access cached content via a user device 18, which may be associated with or otherwise identified in the user policy maintained for the user.

The system 12 further includes or is associated with a context server 20 that is configured to collect context information for the user, and to generate the contextualized policy by inserting one or more updated context-parameters into the one or more context-dependent policy rules of the policy. For example, context information may be collected from or otherwise managed for the user device 18, which may be uniquely associated with a given user, such that that user's contextualized user policy is always applied to the user device 18. For example, a given user policy may include a mobile device identification number or other data item that can be used to invoke that policy whenever access is attempted by the given user device 18. In other embodiments, a given contextualized user policy may be applied to any number of devices, based on determining which user currently is using a given device. Broadly, contextualized policies may be used to manage a given user's "session" based on one or more context parameters. The user's policy may or may not be tied to a particular user device 18.

In any case, the policy server 14 obtains or otherwise updates the contextualized policy responsive to a policy decision request received from a caching agent 22 operating as a policy enforcement point (PEP) for the content cache 16, and correspondingly returns a policy decision to the caching agent 22. Note that the content cache 16 may be standalone, or may be integrated in any of a streaming server 24, or in a media gateway 26, or in a remote content server 28. In another embodiment, the content cache 16, the streaming server 24, and the media gateway 26 all may comprise portions of, or otherwise be integrated in, a content caching system 30, which may be part of a residential or enterprise network. Regardless of these implementation variations, the context server 20 in at least one embodiment is configured to collect context information for the user at least in part by receiving context information from a user agent 32 that is associated with the user. In at least one embodiment, the user agent 32 is implemented in the user device 18 of the user.

The illustrated configuration provides for autonomic operation of the content cache 16 and its supporting entities, according to context-based policy management, wherein usage of the content cache 16 by the user is governed by one or more context-dependent policy rules. Those one or more context-dependent policy rules impose context-based restrictions on usage of the content cache 16 by the user, where those rules are dynamically contextualized (periodically or on-demand), to reflect changing context information for the user (such as changing locations, times, activities, etc.)

Although one preferred embodiment contemplates IMS-based access to content service providers (e.g., an IMS interface between the media gateway 26 and the content server 28), it should be understood that content access and delivery is not limited to IMS-based implementations. It will also be understood by those skilled in the art that these teachings encompass and have direct applicability to developing standards and technologies, such as an IPTV applications server (AS) developed in the Internet Multimedia Subsystem (IMS) standardized by 3GPP, in ETSI TISPAN and other organizations such as the International Telecommunications Union, the Open IPTV Forum and other organizations, for internet-based access to recorded and real-time broadcasted video services (commonly known as "Internet Protocol Television" or IPTV; and "Video on Demand" or VoD). Still further, these teachings readily apply to existing public mobile communications systems (and systems currently under standardization), as well as systems for fixed access to IPTV and other media services, such as services using accesses based on Digital Subscriber Line (DSL) technologies, and those based on fiber-optic access technologies, such as Fiber to the home or FTTH.

Operations in any case may include an administrator (administrative user, such as a parent or IT administrator) establishing or otherwise configuring user policies. The administrator uses an administrator (policy) agent 34 to define a user policy for a given user or users, such as may be embodied in administrator-defined group and user accounts and policy profiles in the policy server 14. Note that the administrative agent 34 is in one or more embodiments, implemented in or associated with a user device 36 that operates under control of the administrator. This user device 36 also may be a multimedia device, and also may be managed in terms of context-based policy controls as taught herein. Thus, the administrative agent 34 may also act as a user agent 32 and, indeed, any number of users may be managed according to the teachings herein, such as may be done for a number of user devices 18 and their associated user agents 32.

Further supporting such management, at least one embodiment of the user agent 32 is configured to obtain or otherwise collect context Information pertaining to the user's interest in and use of certain content, e.g., historical usage information regarding the usage of cached content from the cache content 16, by the user. Context information additionally or alternatively includes information about the user's situation related to content, obtained from sensors (i.e., commuting to work, being at work or at school, relaxing at home, working logged onto corporate web mail, etc.).

To provide context-based policy management on this context information, the context server 20, for example, receives group and user profiles from the policy server 14, and returns updated group and user profiles with policies parameterized with current or most recently updated context information. Having access to the current or updated context information in this manner allows the policy server 14 to act as a policy decision point (PDP), wherein it sends policies, or, equivalently, policy decisions, pertaining to context-based usage restrictions. For example, the policy server 14 may send content access, content view, and content acquisition decisions to one or more caching agents 22, wherein those decisions are based on context-dependent policy rules. As such, the particular usage restrictions imposed on a given user and/or the particular content usage allowed to or provided for a given user device 18 change as the context of the user changes.

In this regard, the one or more caching agents 22 may be collocated with the user's device 18, or with the streaming server 24, for example. Note that the streaming server 24 could be located anywhere in the network 30, or may be located remotely, such as in a service provider's network. In other embodiments, the caching agents 22 are hosted at the content cache 16, or at another communicatively coupled entity within the network 30. Regardless, the caching agent(s) 22 act as PEPs and carry out the context-based policy decisions that determine, for example, the content views that the user is presented with on his or her user device 18. View filtering can be achieved, for example, by matching against MPEG-7 meta-information included in or associated with particular content. The decision whether or not to grant access, or to otherwise control usage of the content cache 16 by the user device 18, thus depends on the context information associated with the user, and the corresponding framework of one or more context-dependent policy rules defined by the administrator, for example.

As mentioned, those context-dependent policy rules are defined on a user basis and/or on a group basis. In at least one embodiment, the policy server 14 or other entity is configured to form groups intelligently, such as based on setup information provided by the administrator (minor, adult, student, etc.) and/or by automatically tracking user behaviors and other context information, such that software-based processing can overtime form groups or associations of users and apply group-based policies accordingly.

Regardless of whether management uses group or per user policies, or both, once content is available from the content server 24 for example, a caching agent 22 can decide on the play-out of requested content according to the user's context information, which may reside in locally-stored policy information, or which may be resident in policy information stored at the policy server 14. In at least one embodiment, the caching agent 22 sends decision requests to the policy server 14, such as when the user device 18 attempts to use the content cache 16 or otherwise obtain content, and the caching agent receives a corresponding context-based policy decision in return. The caching agent 22 may retain that decision, or the underlying policy information, for some period of time, such as for re-use within a given time window.

In other context-based policy decisions, the policy server 14 and/or the caching agent 22 may refrain from downloading content which falls outside of the privileges or rights defined for the user, or where such content falls outside the user's preferences or context. Context acquisition decisions based on context also may include deferring content downloading content if the user's network access conditions are not favorable, if preferred times have been defined for content downloading. Such restrictions may be set or updated dynamically in the policy server 14, such as by the administrator agent 34 operating under administrator control. Content acquisition also may occur collaboratively, where the corresponding caching agents 22 are comprised of peers (i.e., users) in a certain group of interest.

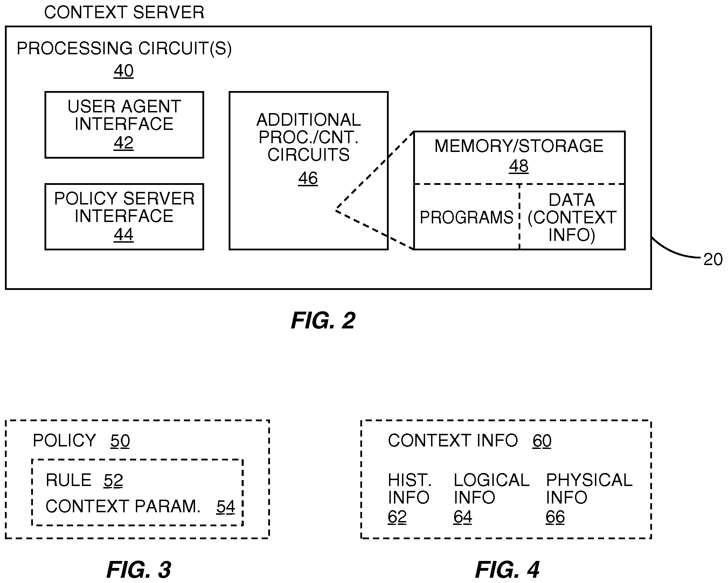

The above context-based policy management, and variations of the above-described policy management, may be implemented at least in part through appropriate configuration of the system 12, including the policy server 14 and the context server 20. Regarding the latter entity, Fig. 2 illustrates one embodiment of a context server 20 configured for context-based policy management, wherein the illustrated context server is characterized by one or more processing circuits 40 that are configured to collect context information for a user, and receive a policy (at least in part) for the user from a policy server 14. In at least one embodiment, the policy includes a context-dependent policy rule for the user. The processing circuit(s) 40 is further configured to generate a contextualized policy for the user, by inserting one or more context parameters into the context-dependent policy rule according to the context information, and sending the contextualized policy back to the policy server 14. For example, context information may be collected for a given user and/or that user's device 18, and the context-dependent policy is applied to accesses made through the user device 18.

In at least one embodiment, the processing circuit(s) 40 comprises a user agent interface 42 toward one or more user agents 32 that is operative to receive at least a portion of the context information from the one or more user agents 32. The circuit(s) 40 further comprises a policy server interface 44 toward the policy server 14 that is operative to receive the policy for the user from the policy server 14 and operative to send the contextualized policy to the policy server 14. The circuit(s) 40 may further comprise additional processing and control circuits 46, which include memory/storage 48. In at least one embodiment, the processing circuit(s) 40 comprises one or more microprocessor-based circuits (a computer system), and the memory/storage 48 includes a computer readable medium that stores a computer program implementing the context server processing taught herein by way of stored computer program instructions.

The memory/storage 48 also is used to store data, such as collected context data and at least temporarily to store policies received from the policy server 14 for contextualization. On that point, Fig. 3 diagrams one embodiment of a context-based policy 50, in terms of its logical data structure, which is tangibly embodied in a computer readable medium. The illustrated data structure includes at least one context-dependent policy rule 52, which in turn includes one or more context parameters 54.

As a non-limiting example, a context-dependent policy rule 52 might comprise the following decision statement: USER X is permitted to access STORED/STREAMED MUSIC only if LOCATION does not equal "School" and if TIME is between "6:00 PM" and "10:00 PM." Here, LOCATION and TIME are context-dependent parameters, which may be tracked or otherwise maintained by the context server 20, such as by receiving updated reports from the user agent 32 associated with USER X. Notably, a given policy 50 can include essentially any number of context-dependent policy rules 52, and the policy server 14 and/or the administrative agent 34 may provide a programmatic or symbolic interface for building logical constructs that embody the context-dependent policy rules 52. Also, such an interface may provide for default (e.g., pick list) context parameters and/or may allow for custom-defined parameters. Further, each such policy can, if desired, be tied to a particular user device 18 and invoked as needed for policy-managing usage of that particular user device 18.

Of course, the extent and nature of parameterization depends on the extent and nature of collectible context information. Thus, the more richly context can be determined for the users, the more elaborately context-based policy controls may be devised. Fig. 4 illustrates a simple, non-limiting example of context information 60, which may be collected for one or more user devices 18-note that different context information can be collected for different user devices 18. The illustrated context information 60 includes historical information 62, logical information 64, and physical information 66.

While not intended as limiting examples, historical context information 62 may include usage/activity histories and other "trend" information that reveals, for example, the types of content of interest to a given user, and the times at which different content typically is accessed by that user. Thus, regardless of the range and type of context information, the processing circuit(s) 40 of the context server 20 is in one or more embodiments configured to collect the context information at least in part by collecting context information bearing on usage of the content cache 16 by a given user.

Correspondingly, a context-dependent policy rule 52 comprises a usage rule governing context-based usage of the content cache 16 by a given user, where at least one context-parameter used for making the policy decision depends on the collected usage information-e.g., on collected historical information 62. That is, put simply, the processing circuit(s) 40 may be configured to collect historical usage information for the user (such as from the user's user agent 32, which may be implemented in the user's device 18), and correspondingly to generate a contextualized policy for the user by inserting one or more context parameters 54 that are dependent in some way on the historical usage information. As one example, "dependent" may mean that historical usage information indicates that a certain type of content is disfavored or that certain performers or artists are disfavored and such information can be used to block content that would otherwise be offered to the user.

As another non-limiting example, the logical context information 64 may include application/function activities, such as sensing whether the user device 18 is engaged in an email session, etc., which may logically relate to whether and what type of content usage should be permitted or offered. Again, context-based policy decisions may be made using such information. For example, a policy rule 52 may be formed around an activity context parameter, such as if ACTIVITY equals "E-MAIL" then block "VIDEO CONTENT" and allow "AUDIO CONTENT."

Finally, again as a non-limiting example, the physical context information 66 may include location (school, work, home, etc.), physical activity (static or in motion), surrounding environment characteristics (noisy, quiet, light, dark, etc.), along with temporal information. In such cases, the processing circuit(s) 40 may be configured to collect physical context information 66 for the user, e.g., from the user's device 18, and correspondingly to generate a contextualized policy for the user device by inserting one or more context parameters dependent on the physical context information.

Regardless of the particular implementation of context information, one or more context-dependent policy rules includes a context parameter used to make a context-dependent policy decision, and the processing circuit(s) 40 are configured to generate the contextualized policy for any given user (or a group of users) by updating the context parameter(s) 54 according to a current or most recently updated value of the context parameters 54 as defined by the collected context information. In this regard, a contextualized policy should be understood as being the same as the policy 50 illustrated in Fig. 3, except that at least one of its context parameters 54 is updated to reflect current or most recent context parameter values at the content server 20 and/or at the relevant user agent(s) 32.

Thus, the policy server 14 may receive a decision request from a caching agent 22, and it may have no value(s) for the context parameter(s) 54 involved in the context-dependent policy rules 52 within the user/group policy 50 implicated by the request, or it may (by timer or other measure) deem them to be stale. As such, the policy server 14 "contextualizes" the policy 50 by sending at least the implicated context parameter(s) 54 to the content server 20, for updating. It may send the entire rule 52 or, indeed, the entire policy 50.

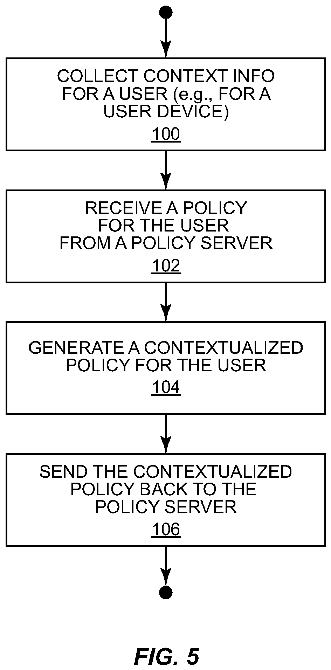

With these content sever functions in mind, Fig. 5 illustrates a broad processing method that may be implemented by the content server 20. In at least one embodiment, the content server 20 is a computer system provisioned with a computer program, or programs, that implement the illustrated method.

Illustrated processing "begins" with collecting context information for one or more users (Block 100). In some embodiments, a given user is uniquely represented by his or her user device 18. Thus, collecting context information for users is, in one or more embodiments, based on collecting context information for their user devices 18. (In such embodiments, the particular user policy invoked can thus depend on the particular user device 18 being used. Other embodiments do not necessarily tie contextualized user policies to a particular device 18, but rather rely on identifying the user and invoking or otherwise applying that user's contextualized policy-as appropriate-to any number of devices that user might use to gain access.)

Regardless, in one or more embodiments, collecting context information entails receiving at least a portion of the context information from user agents 32 that are associated with the users/user device(s) 18 that are being policy managed. Note that such processing may not be a "step" or other sequential processing function, but may rather run continuously or periodically, as a foreground or background processing task, and may be performed concurrently with other tasks.

The illustrated processing continues with receiving a policy 50 (or policies 50) for one or more users, from the policy server 14 (Block 102). Again, this may comprise receiving only a portion of the policy 50-e.g., just the relevant context parameters 54-or may comprise receiving just the context-dependent policy rules 52 that are of interest, or receiving the entire policy 50. Note too that the policy 50 may be sent from the policy server 14 to the context server 20 periodically, for "refreshing" one or more context parameters 54, or may be sent on an as-needed basis, such as when the policy server 14 is requested to make a policy decision.

In any case, the context server 20 generates a contextualized user policy from the received policy 50 (Block 104), by inserting one or more context parameters 54 into the context-dependent policy rule or rules 52 according to the context information 60 that is maintained at the context server 20. This action may entail, for example, inserting the current or most recently collected information. Processing continues with sending the contextualized policy back to the policy server 14 (Block 106).

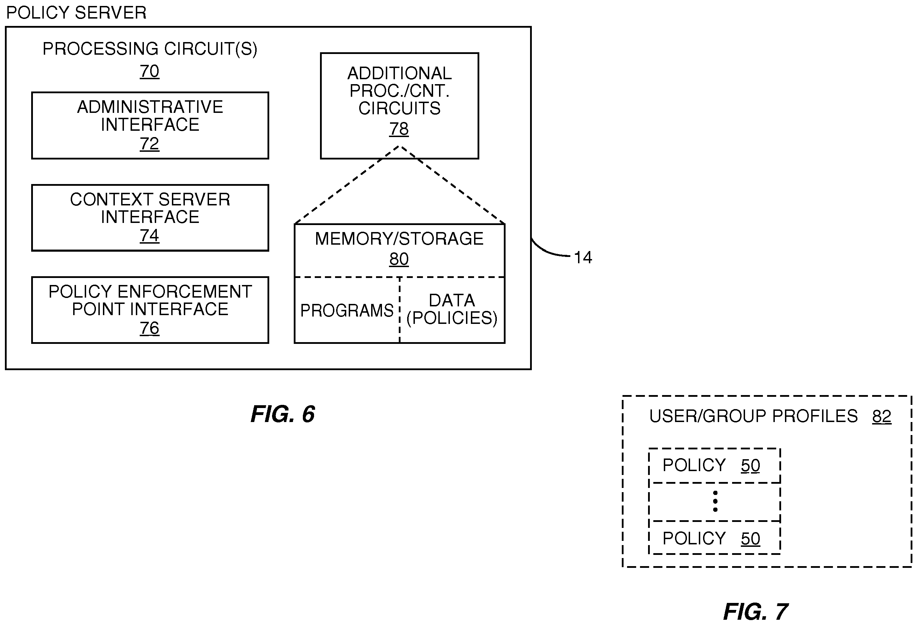

Fig. 6 illustrates one complementary embodiment of the policy server 14, wherein it is configured for context-based policy management, and comprises one or more processing circuits 70 that are configured to store a policy 50 for a user, where the policy 50 includes a context-dependent policy rule 52 for the user. The circuit(s) 70 are further configured to receive a policy decision request and correspondingly contextualize the policy 50 by updating one or more context parameters 54 in the context-dependent policy rule 52, to reflect updated context information 60 for the user, determine a policy decision as a function of the contextualized policy 50, and send the policy decision to a policy enforcement point, for imposition of the policy decision.

The illustrated embodiment of the circuit(s) 70 includes an administrative interface 72 toward an administrative computer (e.g., the administrative device 36 shown in Fig. 1), for receiving policy information for creating the policy 50 for the user. The circuit(s) 70 also includes a context server interface 74 toward a context server 20 for sending at least a portion of the policy 50 for contextualization by the context server 20, and for receiving the contextualized policy 50 in return. Further, the circuit(s) 70 includes a policy enforcement point interface 76 for receiving the policy decision request from a policy enforcement point and correspondingly sending the policy decision to the policy enforcement point (e.g., a caching agent 22).

Further, in one or more embodiments the circuit(s) 70 includes additional processing and control circuits 78, including memory/storage 80. As with the context server 20, the memory/storage 80 of the policy server 14 may include a computer readable medium for storing computer program instructions that implement policy server processing as taught herein. Note that the additional processing and control circuits 78 also may include a configuration/management processor, suited for defining and administering user/group profiles and policies. Fig. 7, for example, illustrates user/group profiles 82 that include a plurality of policies 50, corresponding to different users and/or groups of users. The user/group profiles 82 also may include user/device identifiers, etc., and may be tangibly embodied in the memory/storage 80 as one or more data structures.

As noted, the policy server 14 is in one or more embodiments configured for context-based control of usage of a content cache 16 by a user. Correspondingly, the context-dependent policy rule(s) 50 used by the policy server 14 comprise one or more context-dependent usage rules 52, for governing usage of the content cache by the user. As such, the processing circuit(s) 70 is configured to determine policy decisions by determining a usage decision governing whether or how the user is permitted to use the content cache 16, based on the context-dependent usage rule 52 as updated within the contextualized policy 50. Supporting such contextualization, the processing circuit(s) 70 contextualizes a given policy 50 by sending the one or more context parameters 54 in it to the context server 20 and receiving updated context parameters 54 in return. This action may comprise, for example, sending at least a context-dependent policy rule 52 to the context server 20, and receiving the context-dependent rule 52 with updated context parameters 54 in return.

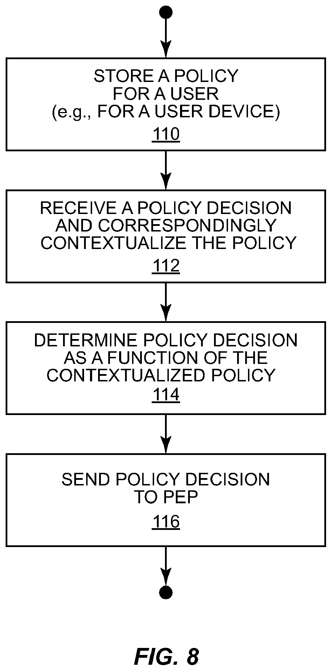

Fig. 8 correspondingly outlines a broad processing method of context-based policy management implemented by at least one embodiment of the policy server 14. Such processing may be carried out by execution of a stored computer program (or programs) at the policy server 14. Regardless, the processing includes storing a policy 50 for a user (Block 110), where the policy 50 includes a context-dependent policy rule 52 for the user. Such processing further includes receiving a policy decision request and correspondingly contextualizing the policy 50 by updating one or more context parameters 54 in the context-dependent policy rule 52 (Block 112), to reflect updated context information 60 for the user. Processing continues with determining a policy decision as a function of the contextualized policy 50 (Block 114), and sending the policy decision to a policy enforcement point (e.g., caching agent 22), for imposition of the policy decision (Block 116).

For example, assuming a given policy 50 is set or otherwise configured by an administrator, the policy server 14 maintains the policy 50 in contextualized form, wherein one or more context-dependent rules 52 are evaluated to make policy enforcement decisions. The policy server 14 keeps their included context parameters 54 dynamically updated to reflect the current or most recently collected context information 60 for the user for which the policy decision is being made. Further, the policy server 14 may converge its policies 50 with other policies that may apply (for instance, from content providers). It may send the policies 50, or policy enforcement decisions to the media gateway 26 for policy enforcement, to caching agents 22 regardless of their location, and/or to the content cache 16 or its associated streaming server 24.

In one example, the media gateway 26 acts as a PEP, enforcing the policies 50 that have been created/contextualized by the policy server 14. Thus, a data stream sent from an IPTV AS or other video streaming device to the media gateway 26 using, for example, a telecom access network (such as fiber to the home or ADSL), or using a broadcast network, such as DVB-T.

A policy 50 can be applied to the data stream before being received into the content cache 16. For example, no data judged unsuitable according to the policy 50 is stored or received into the content cache 16, or is stored but locked according to particular rules 52. Content filtering in this regard may comprise the identification of unsuitable or restricted content, and the blocking or removal or restricting of such content. The identification may be done using the metadata accompanying the stream, or through a system which analyzes descriptions in real-time (MPEG-7 descriptions, for example) and discards or otherwise restricts content which is deemed inappropriate or sensitive. In the same or other embodiments, content may be electronically processed to find sensitive content (such as by evaluating video and/or audio content characteristics, etc.). Data thus may be filtered for blocking, removal, or passing along to the cache, possibly with markings or other data indicating type/sensitivity (e.g., adult content). Such data can be viewed or otherwise used by a user device 18, subject to policy restrictions.

In general, the teachings herein allow a user to determine what is cached or downloaded in advance, and provides a mechanism to tie cached files to different user identities, or to enable these user identities to view the cache differently, depending on their permissions, which can change as a function of context. Doing so provides for sophisticated parental or third-party control over downloaded content, and can be used to provide alternate caches, and groups of caches which are allowed to handle similar content. Further, the teachings provide for context-sensitive deference of caching as well as context-dependent play-out of cached content.

As such, the present invention is not limited to the foregoing discussion and accompanying drawings. Instead, the present invention is limited only by the following claims and their legal equivalents.

## Claims

1. A method in a context server (20) of context-based policy management for a user, comprising the steps of:
collecting (100) context information (60) for the user continuously or periodically, including collecting historical usage information (62) for the user;
receiving (102) a policy (50) for the user from a policy server (14), wherein the received policy (50) includes a context-dependent policy rule (52) for the user, and wherein the context-dependent policy rule (52) includes one or more context parameters (54) used to make a context-dependent policy decision;
generating (104), from the received policy (50), a contextualized policy for the user by inserting the one or more current context parameters (54), used by the policy server (14) for making the context-dependent policy decision for said user, into the context-dependent policy rule (52) of the received policy (50) according to the collected context information (60) and dependent on the historical usage information (62), wherein generating the contextualized policy further comprises updating the one or more context parameters (54) according to a most recently updated value of the one or more context parameters (54); and
sending (106) the contextualized policy back to the policy server (14), wherein the contextualized policy pertains to a context-based usage restriction of a content cache (16).

2. The method of claim 1, wherein collecting (100) the context information (60) includes collecting (100) the context information (60) bearing on usage of the content cache (16) by the user, and wherein the context-dependent policy rule (52) comprises a usage rule governing the context-based usage of the content cache (16) by the user.

3. The method of claim 1, wherein collecting (100) the context information (60) for the user comprises collecting physical context information (66) for the user, and correspondingly in that generating (104) the contextualized policy for the user includes inserting the one or more context parameters (54) dependent on the physical context information (66).

4. The method of claim 1, wherein the method of the context-based policy management, comprises a method of controlling usage of a content cache (16) by the user according to a user context, and wherein collecting (100) the context information (60) for the user comprises collecting at least a portion of the context information (60) from a user agent (32) that is associated with the user and that is configured to track or otherwise indicate one or more characteristics of the content cache (16) usage by the user.

5. A context server (20) configured for context-based policy management wherein one or more processing circuits (40) are configured to:
collect context information (60) for a user continuously or periodically based on collecting historical usage information (62) for the user;
receive a policy (50) for the user from a policy server (14), wherein the received policy (50) includes a context-dependent policy rule (52) for the user, and wherein the context-dependent policy rule (52) includes one or more context parameters (54) used to make a context-dependent policy decision;
generate, from the received policy (50), a contextualized policy for the user by inserting the one or more current context parameters (54), used by the policy server (14) for making the context-dependent policy decision for said user, into the context-dependent policy rule (52) of the received policy (50) according to the collected context information (60) and dependent on the historical usage information (62), wherein the context server (20) is further configured to update the one or more context parameters (54) according to a most recently updated value of the one or more context parameters (54) to generate the contextualized policy for the user; and
send the contextualized policy back to the policy server (14), wherein the contextualized policy pertains to a context-based usage restriction of a content cache (16).

6. The context server (20) of claim 5, wherein the one or more processing circuits (40) are configured to collect the context information (60) at least in part by collecting the context information (60) bearing on usage of the content cache (16) by the user, and wherein the context-dependent policy rule (52) comprises a usage rule governing the context-based usage of the content cache (16) by the user.

7. The context server (20) of claim 5, wherein the one or more processing circuits (40) are configured to collect the context information (60) for the user based on collecting physical context information (66) for the user, and correspondingly to generate the contextualized policy for the user by inserting the one or more context parameters (54) dependent on the physical context information (66).

8. The context server of claim 5, wherein the one or more processing circuits (40) comprise:
a user agent interface (42) toward one or more user agents (32), wherein the user agent interface (42) is operative to receive at least a portion of the context information (60) from the one or more user agents (32), and
a policy server interface (44) toward the policy server (14), wherein the policy server interface (44) is operative to receive the policy (50) for the user from the policy server (14) and operative to send the contextualized policy back to the policy server (14).

9. The context server (20) of claim 5, wherein the context-based policy management by the context server (20) comprises management of usage of the content cache (16) by the user, and correspondingly wherein the one or more processing circuits (40) are configured to collect the context information (60) for the user based on collecting at least a portion of the context information (60) from a user agent (32) that is associated with the user and that is configured to track or otherwise indicate one or more characteristics of the content cache (16) usage by the user.

10. A system for context-based management of cached content comprising:
a policy server (14) configured to make policy decisions controlling usage of a content cache (16) by a user based on a contextualized policy that includes one or more context-dependent policy rules, wherein the one or more context-dependent policy rules include a context parameter (54) used to make a context-dependent policy decision; and
a context server (20) configured to collect context information (60) for the user continuously or periodically based on collecting historical usage information (62) for the user, to receive a policy (50) for the user from the policy server (14), and to generate the contextualized policy by inserting one or more current context-parameters into the one or more context-dependent policy rules (52) of the received policy (50) according to the collected context information (60) and dependent on the historical usage information (62), wherein the context server (20) is further configured to update the context parameter (54) according to a most recently updated value of the context parameter (54) as defined by the collected context information (60), and wherein the contextualized policy pertains to context-based usage restriction of a content cache (16),
wherein said policy server (14) obtains or otherwise updates the contextualized policy responsive to a policy decision request received from a caching agent (22) operating as a policy enforcement point for the content cache (16), and correspondingly returns a policy decision to the caching agent (22), and
wherein said context server (20) is further configured to collect the context information (60) for the user at least in part by receiving the context information (60) from a user agent (32) associated with the user.

## Patentansprüche

1. Verfahren in einem Kontextserver (20) einer Richtlinienverwaltung auf Kontextbasis für einen Benutzer, umfassend die folgenden Schritte:
ständiges oder periodisches Sammeln (100) von Kontextinformationen (60) für den Benutzer, einschließlich Sammeln historischer Nutzungsinformationen (62) für den Benutzer;
Empfangen (102) einer Richtlinie (50) für den Benutzer von einem Richtlinienserver (14), wobei die empfangene Richtlinie (50) eine kontextabhängige Richtlinienregel (52) für den Benutzer beinhaltet und wobei die kontextabhängige Richtlinienregel (52) einen oder mehrere Kontextparameter (54) beinhaltet, die verwendet werden, um eine kontextabhängige Richtlinienentscheidung zu treffen;
Generieren (104) einer kontextualisierten Richtlinie für den Benutzer aus der empfangenen Richtlinie (50) durch Einfügen des einen oder der mehreren aktuellen Kontextparameter (54), die durch den Richtlinienserver (14) verwendet werden, um die kontextabhängige Richtlinienentscheidung für den Benutzer zu treffen, in die kontextabhängige Richtlinienregel (52) der empfangenen Richtlinie (50) gemäß den gesammelten Kontextinformationen (60) und in Abhängigkeit von den historischen Nutzungsinformationen (62), wobei das Generieren der kontextualisierten Richtlinie ferner ein Aktualisieren des einen oder der mehreren Kontextparameter (54) gemäß einem zuletzt aktualisierten Wert des einen oder der mehreren Kontextparameter (54) umfasst; und
Senden (106) der kontextualisierten Richtlinie zurück an den Richtlinienserver (14), wobei die kontextualisierte Richtlinie eine kontextbasierte Nutzungseinschränkung eines Inhalt-Caches (16) betrifft.

2. Verfahren nach Anspruch 1, wobei das Sammeln (100) der Kontextinformationen (60) ein Sammeln (100) der Kontextinformationen (60) mit einem Einfluss auf die Nutzung des Inhalt-Caches (16) durch den Benutzer beinhaltet und wobei die kontextabhängige Richtlinienregel (52) eine Nutzungsregel umfasst, die die kontextbasierte Nutzung des Inhalt-Caches (16) durch den Benutzer regelt.

3. Verfahren nach Anspruch 1, wobei das Sammeln (100) der Kontextinformationen (60) für den Benutzer ein Sammeln physischer Kontextinformationen (66) für den Benutzer umfasst, und entsprechend, dass das Generieren (104) der kontextualisierten Richtlinie für den Benutzer ein Einfügen des einen oder der mehreren Kontextparameter (54) in Abhängigkeit von den physischen Kontextinformationen (66) beinhaltet.

4. Verfahren nach Anspruch 1, wobei das Verfahren der Richtlinienverwaltung auf Kontextbasis ein Verfahren zum Steuern der Nutzung eines Inhalt-Caches (16) durch den Benutzer gemäß einem Benutzerkontext umfasst und wobei das Sammeln (100) der Kontextinformationen (60) für den Benutzer ein Sammeln mindestens eines Teils der Kontextinformationen (60) von einem User Agent (32) umfasst, der dem Benutzer zugeordnet ist und der dazu konfiguriert ist, eine oder mehrere Besonderheiten der Nutzung des Inhalt-Caches (16) durch den Benutzer nachzuverfolgen oder anderweitig anzugeben.

5. Kontextserver (20), konfiguriert für eine Richtlinienverwaltung auf Kontextbasis, wobei eine oder mehrere Verarbeitungsschaltungen (40) zu Folgendem konfiguriert sind:
ständiges oder periodisches Sammeln von Kontextinformationen (60) für einen Benutzer auf Grundlage von Sammeln historischer Nutzungsinformationen (62) für den Benutzer;
Empfangen einer Richtlinie (50) für den Benutzer von einem Richtlinienserver (14), wobei die empfangene Richtlinie (50) eine kontextabhängige Richtlinienregel (52) für den Benutzer beinhaltet und wobei die kontextabhängige Richtlinienregel (52) einen oder mehrere Kontextparameter (54) beinhaltet, die verwendet werden, um eine kontextabhängige Richtlinienentscheidung zu treffen;
Generieren einer kontextualisierten Richtlinie für den Benutzer aus der empfangenen Richtlinie (50) durch Einfügen des einen oder der mehreren aktuellen Kontextparameter (54), die durch den Richtlinienserver (14) verwendet werden, um die kontextabhängige Richtlinienentscheidung für den Benutzer zu treffen, in die kontextabhängige Richtlinienregel (52) der empfangenen Richtlinie (50) gemäß den gesammelten Kontextinformationen (60) und in Abhängigkeit von den historischen Nutzungsinformationen (62), wobei der Kontextserver (20) ferner dazu konfiguriert ist, den einen oder die mehreren Kontextparameter (54) gemäß einem zuletzt aktualisierten Wert des einen oder der mehreren Kontextparameter (54) zu aktualisieren, um die kontextualisierte Richtlinie für den Benutzer zu generieren; und
Senden der kontextualisierten Richtlinie zurück an den Richtlinienserver (14), wobei die kontextualisierte Richtlinie eine kontextbasierte Nutzungseinschränkung eines Inhalt-Caches (16) betrifft.

6. Kontextserver (20) nach Anspruch 5, wobei die eine oder mehreren Verarbeitungsschaltungen (40) dazu konfiguriert sind, die Kontextinformationen (60) zumindest teilweise durch Sammeln der Kontextinformationen (60) mit einem Einfluss auf die Nutzung des Inhalt-Caches (16) durch den Benutzer zu sammeln, und wobei die kontextabhängige Richtlinienregel (52) eine Nutzungsregel umfasst, die die kontextbasierte Nutzung des Inhalt-Caches (16) durch den Benutzer regelt.

7. Kontextserver (20) nach Anspruch 5, wobei die eine oder mehreren Verarbeitungsschaltungen (40) dazu konfiguriert sind, die Kontextinformationen (60) für den Benutzer auf Grundlage von Sammeln physischer Kontextinformationen (66) für den Benutzer zu sammeln und entsprechend die kontextualisierte Richtlinie für den Benutzer durch Einfügen des einen oder der mehreren Kontextparameter (54) in Abhängigkeit von den physischen Kontextinformationen (66) zu generieren.

8. Kontextserver nach Anspruch 5, wobei die eine oder mehreren Verarbeitungsschaltungen (40) Folgendes umfassen:
eine User Agent-Schnittstelle (42) zu einem oder mehreren User Agents (32), wobei die User Agent-Schnittstelle (42) wirksam ist, um mindestens einen Teil der Kontextinformationen (60) von dem einen oder den mehreren User Agents (32) zu empfangen; und
eine Richtlinienserver-Schnittstelle (44) zu dem Richtlinienserver (14), wobei die Richtlinienserver-Schnittstelle (44) wirksam ist, um die Richtlinie (50) für den Benutzer von dem Richtlinienserver (14) zu empfangen, und wirksam ist, um die kontextualisierte Richtlinie zurück an den Richtlinienserver (14) zu senden.

9. Kontextserver (20) nach Anspruch 5, wobei die Richtlinienverwaltung auf Kontextbasis durch den Kontextserver (20) eine Verwaltung der Nutzung des Inhalt-Caches (16) durch den Benutzer umfasst, und wobei entsprechend die eine oder mehreren Verarbeitungsschaltungen (40) dazu konfiguriert sind, die Kontextinformationen (60) für den Benutzer auf Grundlage von Sammeln mindestens eines Teils der Kontextinformationen (60) von einem User Agent (32) zu sammeln, der dem Benutzer zugeordnet ist und der dazu konfiguriert ist, eine oder mehrere Besonderheiten der Nutzung des Inhalt-Caches (16) durch den Benutzer nachzuverfolgen oder anderweitig anzugeben.

10. System zur Verwaltung von gecachtem Inhalt auf Kontextbasis, umfassend:
einen Richtlinienserver (14), der dazu konfiguriert ist, Richtlinienentscheidungen, die die Nutzung eines Inhalt-Caches (16) durch einen Benutzer steuern, auf Grundlage einer kontextualisierten Richtlinie zu treffen, die eine oder mehrere kontextabhängige Richtlinienregeln beinhaltet, wobei die eine oder mehreren kontextabhängigen Richtlinienregeln einen Kontextparameter (54) beinhalten, der dazu verwendet wird, eine kontextabhängige Richtlinienentscheidung zu treffen; und
einen Kontextserver (20), der dazu konfiguriert ist, ständig oder periodisch Kontextinformationen (60) für den Benutzer auf Grundlage von Sammeln historischer Nutzungsinformationen (62) für den Benutzer zu sammeln, eine Richtlinie (50) für den Benutzer von einem Richtlinienserver (14) zu empfangen und die kontextualisierte Richtlinie durch Einfügen eines oder mehrerer aktuellen Kontextparameter in die eine oder mehreren kontextabhängigen Richtlinienregeln (52) der empfangenen Richtlinie (50) gemäß den gesammelten Kontextinformationen (60) und in Abhängigkeit von den historischen Nutzungsinformationen (62) zu generieren, wobei der Kontextserver (20) ferner dazu konfiguriert ist, den Kontextparameter (54) gemäß einem zuletzt aktualisierten Wert des Kontextparameters (54), wie durch die gesammelten Kontextinformationen (60) definiert, zu aktualisieren, und wobei die kontextualisierte Richtlinie eine kontextbasierte Nutzungseinschränkung eines Inhalt-Caches (16) betrifft,
wobei der Richtlinienserver (14) die kontextualisierte Richtlinie als Reaktion auf eine von einem Caching Agent (22), der als ein Richtliniendurchsetzungspunkt für den Inhalt-Cache (16) wirkt, empfangene Richtlinienentscheidungsanforderung erlangt oder anderweitig aktualisiert und entsprechend eine Richtlinienentscheidung an den Caching Agent (22) zurückgibt, und
wobei der Kontextserver (20) ferner dazu konfiguriert ist, die Kontextinformationen (60) für den Benutzer zumindest teilweise durch Empfangen der Kontextinformationen (60) von einem User Agent (32), der dem Benutzer zugeordnet ist, zu sammeln.

## Revendications

1. Procédé dans un serveur de contexte (20) de gestion de politique à base de contexte pour un utilisateur, comprenant les étapes de :
collecte (100) d'informations de contexte (60) pour l'utilisateur de façon continue ou périodique, comprenant la collecte d'informations d'utilisation historiques (62) pour l'utilisateur ;
réception (102) d'une politique (50) pour l'utilisateur à partir d'un serveur de politique (14), dans lequel la politique reçue (50) comprend une règle de politique dépendante du contexte (52) pour l'utilisateur, et dans lequel la règle de politique dépendant du contexte (52) comprend un ou plusieurs paramètres de contexte (54) utilisés pour prendre une décision de politique dépendant du contexte ;
génération (104), à partir de la politique reçue (50), d'une politique contextualisée pour l'utilisateur en insérant les un ou plusieurs paramètres de contexte actuel (54), utilisés par le serveur de politique (14) pour prendre la décision de politique dépendant du contexte pour ledit utilisateur, dans la règle de politique dépendant du contexte (52) de la politique reçue (50) en fonction des informations de contexte collectées (60) et dépendant des informations d'utilisation historiques (62), dans lequel la génération de la politique contextualisée comprend en outre la mise à jour des un ou plusieurs paramètres de contexte (54) selon une valeur des un ou plusieurs paramètres de contexte (54) mise à jour la plus récemment ; et
renvoi (106) de la politique contextualisée au serveur de politique (14), dans lequel la politique contextualisée se rapporte à une restriction d'utilisation à base de contexte d'une mémoire-cache de contenu (16).

2. Procédé selon la revendication 1, dans lequel la collecte (100) des informations de contexte (60) comprend la collecte (100) des informations de contexte (60) portant sur l'utilisation de la mémoire-cache de contenu (16) par l'utilisateur, et dans lequel la règle de politique dépendant du contexte (52) comprend une règle d'utilisation régissant l'utilisation à base de contexte de la mémoire-cache de contenu (16) par l'utilisateur.

3. Procédé selon la revendication 1, dans lequel la collecte (100) des informations de contexte (60) pour l'utilisateur comprend la collecte d'informations de contexte physique (66) pour l'utilisateur, et de la même façon en ce que la génération (104) de la politique contextualisée pour l'utilisateur comprend l'insertion des un ou plusieurs paramètres de contexte (54) dépendant des informations de contexte physique (66).

4. Procédé selon la revendication 1, dans lequel le procédé de la gestion de politique à base de contexte comprend un procédé de commande d'utilisation d'une mémoire-cache de contenu (16) par l'utilisateur en fonction d'un contexte d'utilisateur, et dans lequel la collecte (100) des informations de contexte (60) pour l'utilisateur comprend la collecte d'au moins une partie des informations de contexte (60) à partir d'un agent utilisateur (32) qui est associé à l'utilisateur et qui est conçu pour suivre ou autrement indiquer une ou plusieurs caractéristiques de l'utilisation de la mémoire-cache de contenu (16) par l'utilisateur.

5. Serveur de contexte (20) conçu pour une gestion de politique à base de contexte dans lequel un ou plusieurs circuits de traitement (40) sont conçus pour :
collecter des informations de contexte (60) pour un utilisateur de façon continue ou périodique sur la base de la collecte d'informations d'utilisation historiques (62) pour l'utilisateur ;
recevoir une politique (50) pour l'utilisateur à partir d'un serveur de politique (14), dans lequel la politique reçue (50) comprend une règle de politique dépendant du contexte (52) pour l'utilisateur, et dans lequel la règle de politique dépendant du contexte (52) comprend un ou plusieurs paramètres de contexte (54) utilisés pour prendre une décision de politique dépendant du contexte ;
générer, à partir de la politique reçue (50), une politique contextualisée pour l'utilisateur en insérant les ou plusieurs paramètres de contexte actuel (54), utilisés par le serveur de politique (14) pour prendre la décision de politique dépendant du contexte pour ledit utilisateur, dans la règle de politique dépendant du contexte (52) de la politique reçue (50) en fonction des informations de contexte collectées (60) et dépendant des informations d'utilisation historiques (62), dans lequel le serveur de contexte (20) est en outre conçu pour mettre à jour les un ou plusieurs paramètres de contexte (54) en fonction d'une valeur des un ou plusieurs paramètres de contexte (54) mise à jour la plus récemment pour générer la politique contextualisée pour l'utilisateur ; et
renvoyer la politique contextualisée au serveur de politique (14), dans lequel la politique contextualisée se rapporte à une restriction d'utilisation à base de contexte d'une mémoire-cache de contenu (16).

6. Serveur de contexte (20) selon la revendication 5, dans lequel les un ou plusieurs circuits de traitement (40) sont conçus pour collecter les informations de contexte (60) au moins en partie en collectant les informations de contexte (60) portant sur l'utilisation de la mémoire-cache de contenu (16) par l'utilisateur, et dans lequel la règle de politique dépendant du contexte (52) comprend une règle d'utilisation régissant l'utilisation à base de contexte de la mémoire-cache de contenu (16) par l'utilisateur.

7. Serveur de contexte (20) selon la revendication 5, dans lequel les un ou plusieurs circuits de traitement (40) sont conçus pour collecter les informations de contexte (60) pour l'utilisateur sur la base de la collecte d'informations de contexte physique (66) pour l'utilisateur, et de la même façon pour générer la politique contextualisée pour l'utilisateur en insérant les un ou plusieurs paramètres de contexte (54) dépendant des informations de contexte physique (66).

8. Serveur de contexte selon la revendication 5, dans lequel les un ou plusieurs circuits de traitement (40) comprennent :
une interface d'agent utilisateur (42) vers un ou plusieurs agents utilisateurs (32), dans lequel l'interface d'agent utilisateur (42) sert à recevoir au moins une partie des informations de contexte (60) à partir des un ou plusieurs agents utilisateurs (32), et
une interface de serveur de politique (44) vers le serveur de politique (14), dans lequel l'interface de serveur de politique (44) sert à recevoir la politique (50) pour l'utilisateur à partir du serveur de politique (14) et à renvoyer la politique contextualisée au serveur de politique (14).

9. Serveur de contexte (20) selon la revendication 5, dans lequel la gestion de politique à base de contexte par le serveur de contexte (20) comprend la gestion d'utilisation de la mémoire-cache de contenu (16) par l'utilisateur, et de la même façon dans lequel les un ou plusieurs circuits de traitement (40) sont conçus pour collecter les informations de contexte (60) pour l'utilisateur sur la base de la collecte d'au moins une partie des informations de contexte (60) à partir d'un agent utilisateur (32) qui est associé à l'utilisateur et qui est conçu pour suivre ou autrement indiquer une ou plusieurs caractéristiques de l'utilisation de la mémoire-cache de contenu (16) par l'utilisateur.

10. Système de gestion à base de contexte de mémoire-cache de contenu comprenant :
un serveur de politique (14) conçu pour prendre des décisions de politique commandant l'utilisation d'une mémoire-cache de contenu (16) par un utilisateur sur la base d'une politique contextualisée qui comprend une ou plusieurs règles de politique dépendant du contexte, dans lequel les une ou plusieurs règles de politique dépendant du contexte comprennent un paramètre de contexte (54) utilisé pour prendre une décision de politique dépendant du contexte ; et
un serveur de contexte (20) conçu pour collecter des informations de contexte (60) pour l'utilisateur de façon continue ou périodique sur la base de la collecte d'informations d'utilisation historiques (62) pour l'utilisateur, pour recevoir une politique (50) pour l'utilisateur à partir du serveur de politique (14), et pour générer la politique contextualisée en insérant un ou plusieurs paramètres de contexte actuel dans les une ou plusieurs règles de politique dépendant du contexte (52) de la politique reçue (50) en fonction des informations de contexte collectées (60) et dépendant des informations d'utilisation historiques (62), dans lequel le serveur de contexte (20) est en outre conçu pour mettre à jour le paramètre de contexte (54) en fonction d'une valeur du paramètre de contexte (54) mise à jour le plus récemment telle que définie par les informations de contexte collectées (60), et dans lequel la politique contextualisée se rapporte à une restriction d'utilisation à base de contexte d'une mémoire-cache de contenu (16),
dans lequel ledit serveur de politique (14) obtient ou autrement met à jour la politique contextualisée en réponse à une demande de décision de politique reçue à partir d'un agent de mise en cache (22) fonctionnant comme un point d'application de politique pour la mémoire-cache de contenu (16), et renvoie de la même façon une décision de politique à l'agent de mise en cache (22), et
dans lequel ledit serveur de contexte (20) est en outre conçu pour collecter les informations de contexte (60) pour l'utilisateur au moins en partie en recevant les informations de contexte (60) à partir d'un agent utilisateur (32) associé à l'utilisateur.
